# EUROPÄISCHE PATENTSCHRIFT

(11) **EP 1 632 426 B1**
(45) Veröffentlichungstag und Bekanntmachung des Hinweises auf die Patenterteilung: **10.01.2007**
(21) Anmeldenummer: 05016752.7
(22) Anmeldetag: 02.08.2005
(51) Int. Cl.: B62D 51/00, B62B 5/06

(54) **Deichsel für einen Mitgeh- und Mitfahrstapler**
Drawbar for a forklift truck
Timon pour un chariot élévateur

(30) Priorität: 01.09.2004 DE 102004042226
(43) Veröffentlichungstag der Anmeldung: 08.03.2006
(73) Patentinhaber: Jungheinrich Aktiengesellschaft, 22047 Hamburg (DE)
(72) Erfinder: Lohmann, Helmut, 27404 Nartum-Gyhum (DE); Niebuhr, Michael, 22941 Bargteheide (DE)
(74) Vertreter: Graalfs, Edo

(56) Entgegenhaltungen:
- EP-A- 1 153 815
- DE-A1- 4 413 631
- US-A- 5 245 144
- US-B1- 6 464 025

## Beschreibung

Die Erfindung bezieht sich auf eine Deichsel für einen Mitgeh- und Mitfahrstapler nach dem Patentanspruch 1.

Deichselgesteuerte Flurförderzeuge sind zumeist entweder für den Mitgehbetrieb oder den Mitfahrbetrieb ausgelegt. Im letzteren Fall ist am Flurförderzeuge eine Stehplattform für den Bediener vorgesehen, von der aus er die Deichsel über den Deichselkopf erfaßt. Bei Mitfahrflurförderzeugen ist die Deichsel in den meisten Fällen viel kürzer ausgeführt als bei reinen Mitgeh-Flurförderzeugen. Es ist jedoch auch bekannt, Mitfahrflurförderzeuge für den Mitgehbetrieb zu benutzen. In diesem Fall ist an der Rückseite des Flurförderzeugs eine Stehplattform vorgesehen, auf welcher der Bediener stehen kann, wobei er einen Deichselkopf mit einer Hand erfaßt und betätigt, während die andere Hand sich an einem Haltebügel festhält, der sich oberhalb des Gehäuses des Flurförderzeugs erstreckt. Ein derartiges Flurförderzeug ist etwa aus US 6 464 025, 5 245 144, 5 964 313 oder 6 382 359 bekannt geworden. Die Deichsel weist eine Deichselstange auf, die um eine horizontale Achse schwenkbar gelagert ist und gleichzeitig um eine vertikale Achse gedreht werden kann, um eine Lenkbewegung für das zu lenkende Rad durchzuführen. Am oberen Ende der Deichselstange ist ein Deichselkopf angebracht, der typischerweise symmetrisch zur Längsachse der Deichselstange ist und ein Querstück oder Trägerteil aufweist, das sich quer zur Deichselstange erstreckt und von dem mittig nach hinten bzw. oben ein Horn abgeht. Beidseits des Horns sind stangenartige Griffabschnitte angeordnet, die im Abstand zum Querstück und annähernd parallel zu diesem angeordnet und drehbar gelagert sind. Die drehbare Lagerung erfolgt am inneren Ende am Horn und am äußeren Ende an Schenkelabschnitten, die annähernd parallel zum Horn verlaufen und mit dem Querstück verbunden sind. Ein derartiger Aufbau eines Deichselkopfes ist nicht nur in den oben genannten Schriften offenbart, sondern findet sich nahezu bei allen Deichseln für Flurförderzeuge. Die Drehbarkeit der Griffabschnitte hat die Aufgabe, den Fahrmotor bzw. seine Steuerschaltung zu betätigen. Die Fahrgeschwindigkeit entspricht dem Drehwinkel der Griffabschnitte. Die Griffabschnitte sind entweder mechanisch oder elektrisch gekoppelt, so daß es für die Fahrsteuerschaltung gleich ist, welcher der Griffabschnitte betätigt wird.

Die beschriebenen Flurförderzeuge bzw. Stapler benötigen außerdem einen Antrieb zum Heben und Senken des Lasttragmittels, das zumeist eine sogenannte Lastgabel ist. Die Ansteuerung des Lasttragmittels erfolgt ebenfalls vom Deichselkopf aus. In den oben genannten Schriften ist auf der Oberseite des Deichselkopfes eine Tastenanordnung vorgesehen zur Betätigung des Antriebs für das Heben und Senken des Lasttragmittels. Aus EP 1 153 815 A1 ist für einen Deichselkopf auch bekannt geworden, die Griffabschnitte unbeweglich auszuführen und einen Drehfahrschalter zwischen dem Horn und den zugeordneten Enden der Griffabschnitte anzuordnen. Aus US 5 595 259 ist bekannt, die Griffabschnitte zur Betätigung eines Fahrschalters auszuführen und an den äußeren Enden einen Ansatz (Paddel) anzubringen, womit eine Drehbetätigung im Mitgehbetrieb erleichtert werden soll. Aus DE 44 13 631 A1 ist schließlich bekannt geworden, zwischen dem Horn und dem Griffabschnitt eines Deichselkopfes Tasten für das Heben und Senken des Lasttragmittels vorzusehen.

Der Erfindung liegt die Aufgabe zugrunde, eine Deichsel für einen Mitgeh- und Mitfahrstapler zu schaffen, bei der unabhängig von ihrer Winkelstellung und unabhängig davon, ob der Bediener mitfährt oder mitgeht, eine ergonomisch günstige Betätigung des Fahrmotors und des Heben- und Senkenantriebs ermöglicht ist.

Diese Aufgabe wird durch die Merkmale des Patentanspruchs 1 gelöst.

Bei der erfindungsgemäßen Deichsel sind an beiden Seitenflächen Tasterabschnitte oberhalb der Griffabschnitte angeordnet, wobei die Tasterabschnitte parallel zur Achse des Horns in Reihe liegen. Sie können vom Daumen oder dem Zeigefinger einer den zugeordneten Griffabschnitt erfassenden Hand betätigt werden. Die Tasterabschnitte sind annähernd um eine horizontale Achse schwenkbar am Horn gelagert. Sie erstrecken sich nach vom bzw. nach hinten über die Griffabschnitte hinaus, wodurch sie auch von der Unterseite des Deichselkopfes mit dem Daumen oder Zeigefinger betätigbar sind. Eine Federanordnung spannt die Tasterabschnitte in eine neutrale Position vor. Den Tasterabschnitten ist eine Schalteranordnung zugeordnet, die durch ein Verschwenken der Tasterabschnitte betätigt wird zur Ansteuerung einer Heben/Senken-Steuervorrichtung für das Lasttragmittel. Die Schalteranordnung kann in das Horn integriert sein und zum Beispiel durch Lagerwellen der Tasterabschnitte betätigt werden. Es ist jedoch auch denkbar, Betätigungselemente bzw. Schaltkontakte an der Außenseite des Horns vorzusehen, welche von den Tasterabschnitten bei einer Betätigung ihrerseits betätigt werden.

Wenn vorstehend und nachstehend im Hinblick auf den Deichselkopf von "oben" und "unten" gesprochen wird, dann meint dies eine Orientierung des Deichselkopfes bzw. der Deichselstange im Winkel zur Vertikalen. Es versteht sich, daß eine senkrecht gestellte Deichsel diese Definition nicht mehr erfüllt. In diesem Falle entspräche die Oberseite des Deichselkopfes der Vorderseite und die Unterseite der Rückseite. Gleichwohl ist es naturgemäß möglich, eine Betätigung des Staplers auch mit senkrechter Deichsel durchzuführen.

Nach einer Ausgestaltung der Erfindung ist es besonders vorteilhaft, wenn die Tasterabschnitte an einem einteiligen Hebel ausgebildet sind, der nach Art einer Wippe zwischen den Enden schwenkbar an der Seitenfläche des Horns gelagert ist.

Ein Merkmal der Erfindung ist, daß die Tasterabschnitte oder die Wippe auch von der Unterseite des Deichselkopfes betätigt werden können. Bei Tasterabschnitten kann eine Betätigung von oben oder unten die gleiche Funktion steuern, beispielsweise Heben oder Senken. Dies ist bei einer Wippe naturgemäß nicht möglich. Wird eine Wippe an einem Ende von der Unterseite betätigt, entspricht das der gleichen Funktion wie bei Betätigung der Wippe von oben am anderen Ende.

Wird eine Wippe verwendet, ist es nach einer weiteren Ausgestaltung der Erfindung vorteilhaft, wenn die Drehrichtung von Griffabschnitt einerseits und die Schwenkrichtung von der Wippe andererseits gleichgerichtet sind. So kann zum Beispiel bei Vorwärtsfahrt der Griffabschnitt vom auf der Plattform stehenden Bediener fort gedreht werden. Dies entspricht der Situation, in der das Lasttragmittel eine Palette aufnehmen soll. Eine Verschwenkung der Wippe in gleichem Drehsinn führt zu einem Absenken des Lasttragmittels. Wird hingegen das Lasttragmittel aus der Palette entfernt, muß der Griffabschnitt in die entgegengesetzte Richtung gedreht werden, d.h. auf den Bediener zu. Eine Verschwenkung der Wippe in gleicher Richtung führt zu einem Anheben des Lasttragmittels.

Ein Ausführungsbeispiel der Erfindung wird nachfolgend anhand von Zeichnungen näher erläutert.
- Fig. 1: zeigt perspektivisch einen Mitgeh- und Mitfahrstapler nach dem Stand der Technik.
- Fig. 2: zeigt perspektivisch einen Deichselkopf von der Oberseite nach der Erfindung.
- Fig. 3: zeigt den Deichselkopf nach Fig. 2 in der Seitenansicht.
- Fig. 4: zeigt in Draufsicht den Deichselkopf nach Fig. 2 im Mitgängerbetrieb bei Betätigung der Funktion Heben.
- Fig. 5: zeigt eine ähnliche Darstellung wie Fig. 4 bei Betätigung der Funktion Senken.
- Fig. 6: zeigt die Rückansicht des Deichselkopfes nach Fig. 4 in gleicher Betätigungshaltung des Bedieners.
- Fig. 7: zeigt die Rückansicht des Deichselkopfes nach Fig. 5 in gleicher Haltung des Bedieners.
- Fig. 8: zeigt die Draufsicht auf den Deichselkopf nach Fig. 2 in einer anderen Haltung des Bedieners bei der Funktion Senken.
- Fig. 9: zeigt eine alternative Darstellung der Betätigung der Deichsel im Verhältnis zu Fig. 8.
- Fig. 10: zeigt die Betätigung des aufrecht stehenden Deichselkopfes nach Fig. 2 bei der Funktion Senken.
- Fig. 11: zeigt die Betätigung des Deichselkopfes nach Fig. 2 in senkrechter Stellung bei der Funktion Heben.
- Fig. 12: zeigt den Deichselkopf nach Fig. 2 bei der Betätigung im Mitfahrbetrieb bei der Funktion Senken.
- Fig. 13: zeigt eine ähnliche Darstellung wie Fig. 12 bei der Funktion Heben.

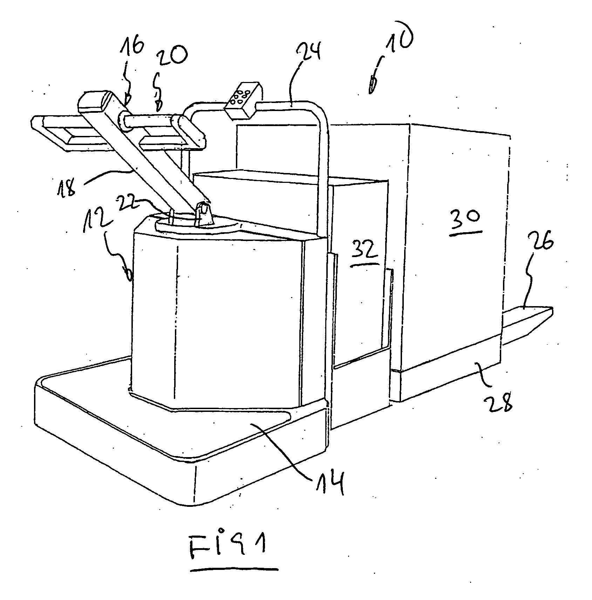

Fig. 1 zeigt einen Mitgeh- und Mitfahrstapler 10, wie er etwa aus der US 6 382 359 B1 bekannt geworden ist. Er weist einen Staplerkörper 12 auf, an dem an der Rückseite eine Stehplattform 14 für einen Bediener angebracht ist. An der Oberseite des Staplerkörpers 12 ist eine Deichsel 16 angelenkt, die aus einer Deichselstange 18 und einem Deichselkopf 20 besteht. Die Deichselstange 18 ist bei 22 an der Oberseite des Körpers 12 um eine horizontale Achse schwenkbar gelagert. Außerdem kann die Deichsel 16 um eine vertikale Achse verdreht werden zur Lenkung des nicht gezeigten gelenkten Rades des Staplers 10. An der Oberseite des Körpers 12 befindet sich ein umgekehrt U-förmiger Haltebügel 24, an dem der Bediener sich festhalten kann, wenn er auf der Plattform 14 steht. Er kann auf der linken oder rechten Seite der Plattform 14 stehen, je nachdem, ob er Links- oder Rechtshänder ist. Steht er auf der rechten Seite, hält er sich mit der rechten Hand am Bügel 24 fest und betätigt den Deichselkopf 16 mit der linken Hand. Steht er auf der linken Seite der Plattform 14, verhält es sich genau umgekehrt.

An der vorderen Seite befindet sich ein Lasttragmittel in Form einer Lastgabel, von der eine Zinke bei 26 zu erkennen ist. Die Lastgabel nimmt eine Palette 28 auf, auf der eine Last 30 angeordnet ist. Zwischen dem Lasttragmittel und dem Staplerkörper 12 ist eine Batterie 32 angeordnet.

Der Stapler 10 weist einen nicht gezeigten Fahrmotor auf, dessen Funktion vom Deichselkopf 16 aus betätigt wird. Außerdem ist ein Antrieb für das Heben und Senken des Lasttragmittels vorgesehen. Ein solcher Antrieb ist ebenfalls nicht dargestellt. Einzelheiten hierzu sollen nicht erläutert werden. Sie sind allgemein bekannt, etwa aus der bereits erwähnten US 6 382 359 B1 oder dem anderen eingangs erwähnten Stand der Technik.

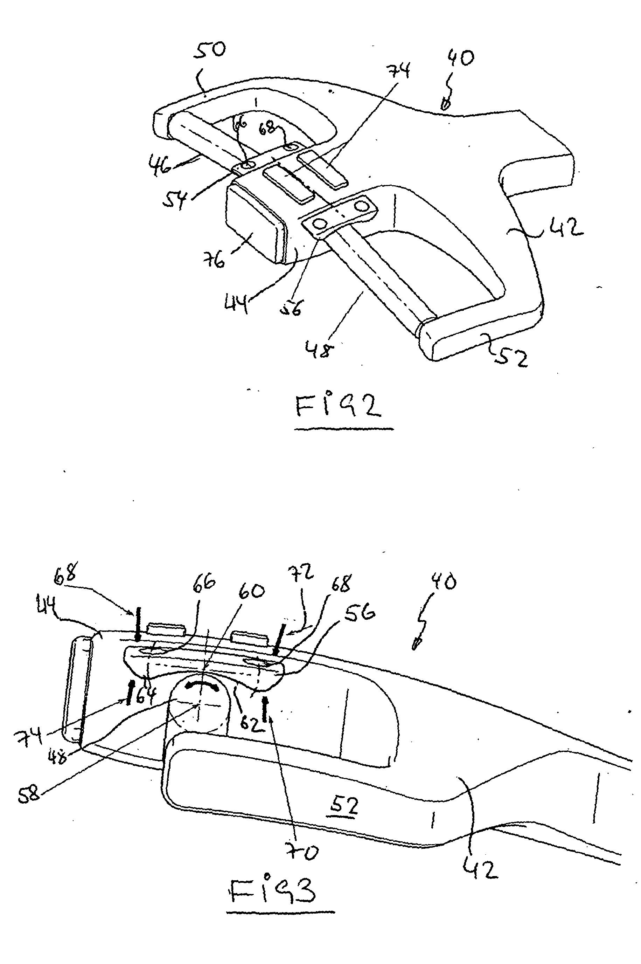

Ein Deichselkopf 40, wie er in den Fign. 2 bis 13 dargestellt ist, ist gegenüber dem Deichselkopf 16 nach Fig. 1 abgewandelt. Er ist jedoch mit einer Deichselstange verbunden, wie sie etwa der Deichselstange 18 entspricht. Auch die übrigen Teile und Funktionen, die vom Deichselkopf 40 aus gesteuert werden, entsprechen denen des Staplers nach Fig. 1.

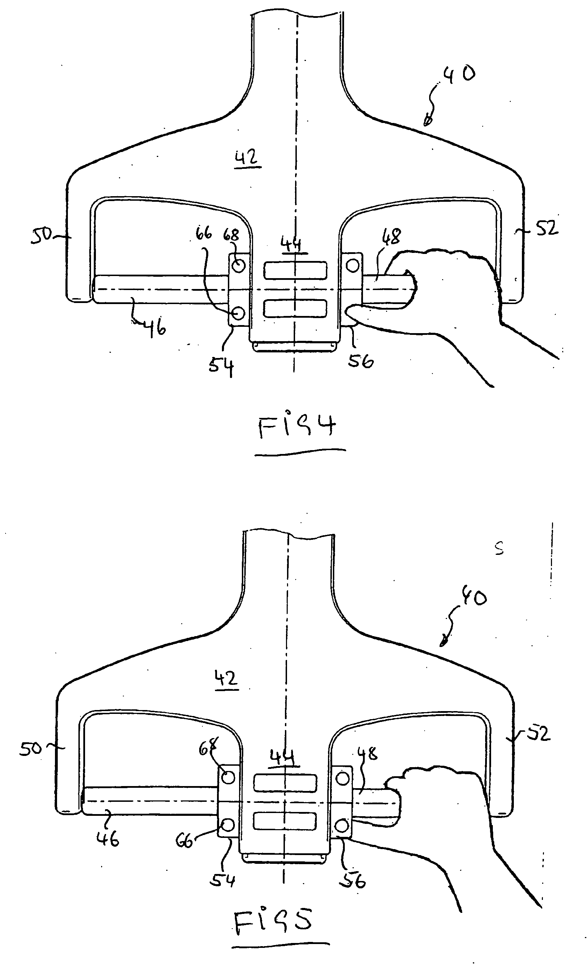

Der Deichselkopf 40 weist ein Querstück 42 auf, das mit der nicht gezeigten Deichselstange verbunden ist und sich quer zur Längsachse der Deichselstange erstreckt. Das Querstück 42 wird zum Ende hin schmaler sowohl von oben betrachtet als auch von der Seite. Außerdem ist seine Oberseite gewölbt, wie sich aus Fig. 3 ergibt. Zur Seite hin fällt mithin die obere Seite oder Fläche des Querstücks 42 ab. In der Mitte ist auf der der Deichselstange gegenüberliegenden Seite ein Horn 44 angeordnet, der mit seiner Achse zur Längsachse der nicht gezeigten Deichselstange ausgerichtet ist. Das Horn 44 weist eine schwach konvex gewölbte obere Fläche auf und annähernd plane Seitenflächen. Auf gegenüberliegenden Seiten des Horns 44 sind stangenartige Griffabschnitte 46, 48 angeordnet, die sich annähernd parallel zum Querstück 42 im Abstand zu diesem erstrecken. Wie sich aus den Fign. 2 und 3 oder auch 6 und 7 ergibt, haben die Griffabschnitte 48 nach außen hin ein Gefälle. Die Griffabschnitte sind an ihrem äußeren Ende in Schenkelabschnitten 50, 52 drehbar gelagert. Die Schenkelabschnitte 50, 52 erstrecken sich annähernd parallel zum Horn 44 und bilden mit diesem, den Griffabschnitten 46, 48 und dem Querstück 42 Grifföffnungen. Die Griffabschnitte 46, 48 sind drehbar auch in den Seiten des Horns 44 gelagert. Sie betätigen eine Steuervorrichtung für den Fahrmotor (nicht gezeigt). Beispielsweise führt eine Drehung der Griffabschnitte 46, 48 in Richtung Deichselstange zu einer Vorwärtsfahrt und eine Drehung in entgegengesetzter Richtung zu einer Rückwärtsfahrt. Damit entspricht die Drehung der Griffabschnitte 46, 48 sinnfällig der Fahrtrichtung des Staplers.

Auf beiden Seiten des Horns 44 ist an den Seitenflächen jeweils eine Wippe 54, 56 um eine Achse schwenkbar gelagert, welche annähernd parallel zu der Drehachse der Griffabschnitte 46, 48 ist. In Fig. 3 ist die Drehachse des Griffabschnitts bei 58 angegeben und die Schwenkachse der Wippe 56 bei 60. Man erkennt, daß die Schwenkachse 60 oberhalb der Drehachse 58 liegt und sehr nahe am Griffabschnitt 48. Es ist jedoch nicht obligatorisch, daß die Achsen 58, 60 parallel verlaufen.

Die Wippe 54, 56 weist zum Beispiel eine Welle auf, die in das Innere des Horns 44 geführt ist und dort eine Schalteranordnung betätigt, die ihrerseits die Steuervorrichtung für das Heben und Senken des Staplers steuert. Die Wippe 54, 56 ist durch eine nicht gezeigte Federanordnung in eine mittlere neutrale Position vorgespannt. Dies ist nicht gezeigt. Die Oberseite des Wippe ist an den Verlauf der Oberseite des Horns 44 angepaßt, während die Unterseite zwischen den Enden konkav gewölbt ist, wie bei 62 zu erkennen. An den Enden ist die Unterseite, wie bei 64 gezeigt, ballig ausgebildet.

In Fig. 3 ist durch die Kreise 66, 68 eine Betätigungsfläche für die Wippe 54, 56 dargestellt. Auch die balligen unteren Abschnitte 64 bilden Betätigungsflächen, worauf weiter unten noch näher eingegangen wird.

In Fig. 3 wird festgelegt, daß ein Verschwenken der Wippe 56 entgegengesetzt der Uhrzeigerrichtung, d.h. Betätigung in Richtung des Pfeils 68 bzw. 70, ein Heben des Lasttragmittels zur Folge hat. Umgekehrt bewirkt ein Verschwenken der Wippe 56 in Uhrzeigerrichtung entsprechend den Pfeilen 72, 74 ein Senken des Lasttragmittels. Man erkennt, daß durch Betätigung der Wippe 56 an einem Arm sowohl ein Heben als auch ein Senken bewerkstelligt werden kann. Außerdem kann die Wippe von unten erfaßt werden, um ein Heben oder ein Senken herbeizuführen.

Damit die Wippe 54, 56 sowohl von oben als auch unten betätigt werden kann, ist der Hebel, der die Wippe 54, 56 bildet, ausreichend lang zu machen, daß er ausreichend weit über den zugehörigen Griffabschnitt 46, 48 übersteht. Um eine unwillkürliche Betätigung zu vermeiden, ist die Oberseite der Wippe 54, 56 etwas unterhalb der Oberseite des Horns 44 gelegt. Außerdem liegt das Ende der Wippe 54, 56 in deutlichem Abstand zum Ende des Horns 44.

Aus der Zuordnung der Bewegungen von Griffabschnitt 46, 48 einerseits und Wippe 54, 56 andererseits nach Fig. 3 wird deutlich, daß eine Verschwenkung der Wippe 54, 56 in die gleiche Drehrichtung wie der Griffabschnitt 54, 56 ein Senken des Lasttragmittels zur Folge hat. Umgekehrt führt die Drehrichtung des Griffabschnitts 46, 48 in die entgegengesetzte Richtung zu einem Heben der Wippe 54, 56, wenn sie in gleicher Richtung betätigt wird. Dies ist eine sinnfällige Zuordnung, wenn man den Betrieb des Staplers beim Aufnehmen bzw. bei einem Verlassen einer Palette betrachtet.

In den Fign. 2 bis 13 ist eine einteilige Wippe dargestellt. Es versteht sich, daß die Wippe auch unterteilt sein kann in zwei Tasterabschnitte auf jeder Seite des Horns 44, wobei die Tasterabschnitte in gleicher Weise betätigt werden können, wie die gezeigte Wippe nach den Fign. 2 bis 13. Die Tasterabschnitte bilden z.B. einarmige Hebel.

Wie zu erkennen, ist auch der Deichselkopf 40 nach den Fign. 2 bis 13 symmetrisch zur Längsachse der nicht gezeigten Deichselstange aufgebaut, und die Betätigungselemente zur Betätigung der Funktionen des Flurförderzeugs sind auf jeder Seite der Symmetrieachse gleichwirkend. Dies kann durch eine mechanische oder eine elektrische Kopplung erreicht werden.

Wie bereits eingangs vermerkt, wird bei dem gezeigten Deichselkopf 40 von einer Oberseite und einer Unterseite gesprochen. Dies bezieht sich auf die Geometrie bei einer Orientierung des Deichselkopfes 40 mit einer zur Vertikalen geneigten Deichsel, wie etwa in Fig. 1 dargestellt. Die Deichsel kann auch senkrecht gestellt werden, die beschriebene Charakterisierung wird gleichwohl beibehalten, obwohl dann z.B. die Oberseite des Deichselkopfes seine Vorderseite wird.

Auf der Oberseite des Horns 44 sind zwei Taster 74 für weitere Funktionen des nicht gezeigten Staplers vorgesehen. Außerdem ist an der Rückseite des Horns 44 ein Taster 76 für einen Auffahrschutz (Bauchtaste) angebracht.

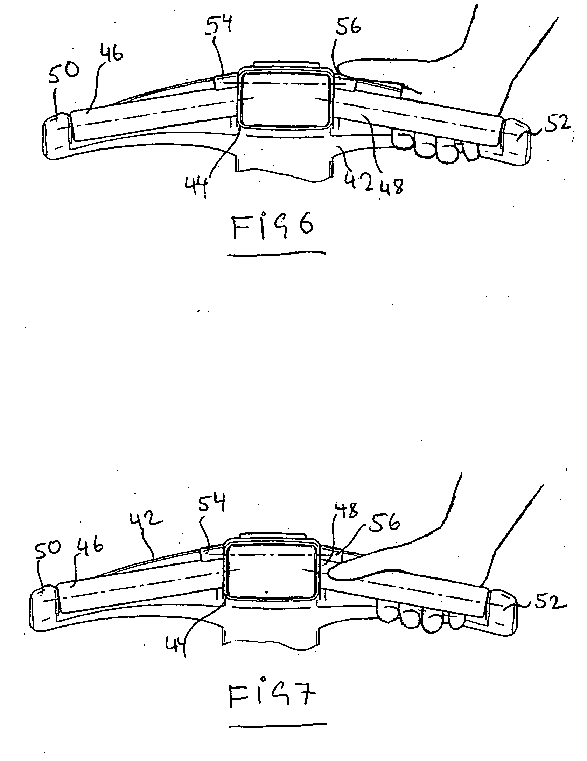

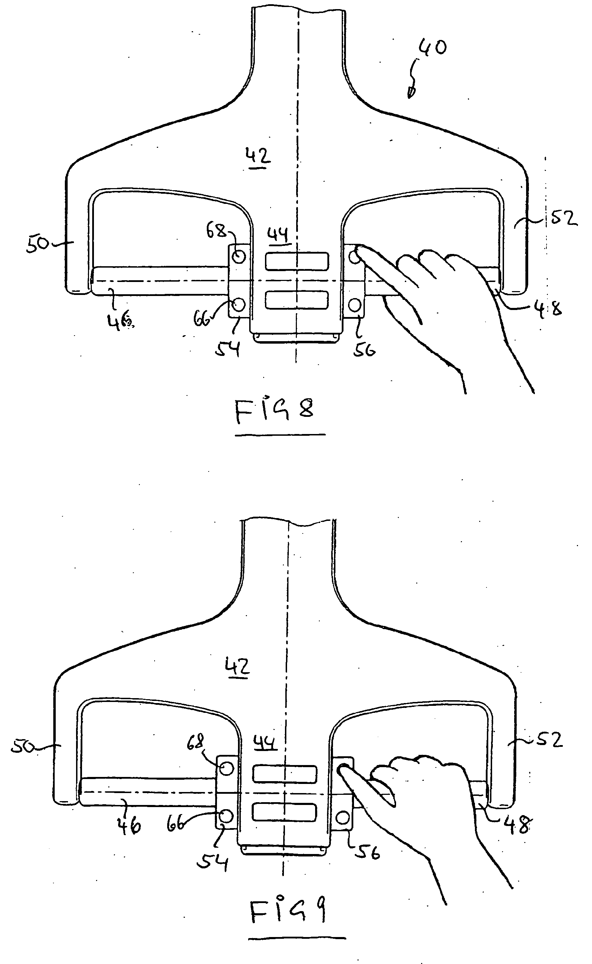

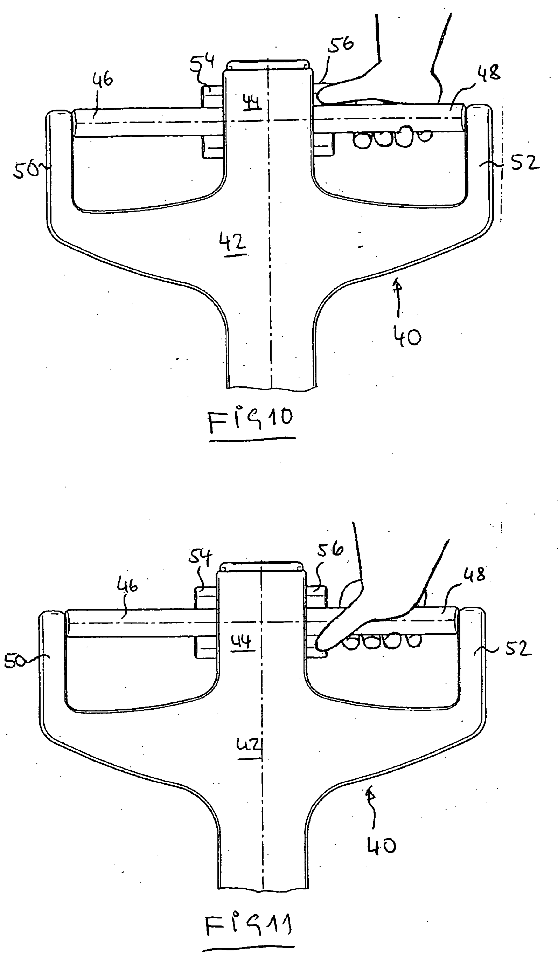

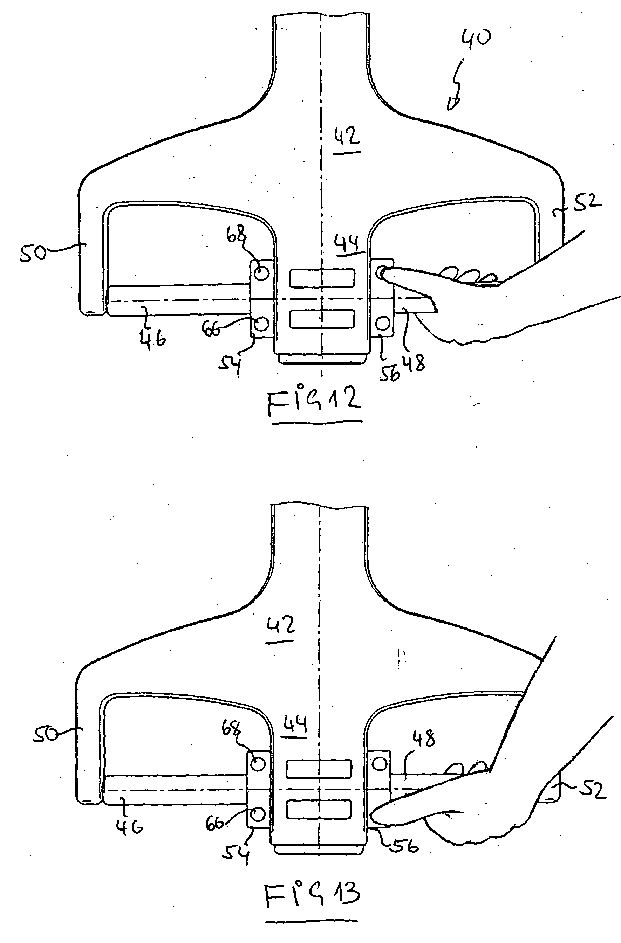

In den Fign. 4 bis 11 ist eine Betätigung des Deichselkopfes 40 nach den Fign. 2 bis 3 im Mitgängerbetrieb dargestellt. Im Mitgängerbetrieb steht bzw. geht der Bediener hinter dem Stapler, etwa dem Stapler 10, wobei die Deichsel eine Orientierung hat, wie sie ebenfalls in Fig. 1 dargestellt ist. In den Fign. 4 und 5 ist dargestellt, wie die rechte Hand des sonst nicht gezeigten Bedieners den drehbaren Griffabschnitt 48 erfaßt und gleichzeitig mit seinem Daumen das zugeordnete Ende der Wippe 56 betätigt, wodurch ein Heben des Lasttragmittels bewirkt wird. In der Darstellung nach Fig. 5 ergreift die rechte Hand des Bedieners wiederum den Griffabschnitt 48, während sein Daumen am zugekehrten Ende unter die Wippe 56 faßt, d.h. in Richtung Pfeil 74 nach Fig. 3 betätigt. Dadurch wird die Senkfunktion des Lasttragmittels bewerkstelligt. In Fig. 6 ist die Rückansicht der Darstellung nach Fig. 4 bei gleicher Betätigung der Wippe 56 dargestellt und in Fig. 7 die Rückansicht der Darstellung nach Fig. 5 bei gleicher Betätigung. Wie erkennbar, braucht der Bediener den Griffabschnitt 48 nicht loszulassen, wenn er die Wippe 56 betätigen will. Aus den Fign. 6 und 7 ist im übrigen zu erkennen, daß die Dreh- bzw. Schwenkachsen von Griffabschnitt 46, 48 einerseits und Wippe 54, 56 andererseits nicht gleichgerichtet sein müssen. Sie sind in den Fign. 6 und 7 strichpunktiert eingezeichnet.

In den Fign. 8 und 9 ist die unterschiedliche Betätigung der Wippe 56 für den Senkbetrieb dargestellt. In Fig. 8 wird die vordere obere Tastfläche 58 vom Zeigefinger der rechten Hand betätigt, welche den Griffabschnitt 48 erfaßt. In Fig. 9 wird mit dem Daumen der den Griffabschnitt 48 erfassenden Hand ebenfalls die innen liegende Tastfläche 68 erfaßt und gedrückt.

In den Fign. 10 und 11 ist die senkrechte Orientierung der Deichsel bzw. des Deichselkopfes 40 dargestellt, wobei die rechte Hand den Griffabschnitt 48 im Mitgängerbetrieb erfaßt. In den Fign. 10 und 11 ist daher die ""Unterseite" des Deichselkopfes 40 zu erkennen sowie auch die Unterseite der Wippe 54, 56. In Fig. 10 legt sich der Daumen der den Griffabschnitt 48 erfassenden Hand gegen die zugeordnete hintere Unterseite (Abschnitt 64 in Fig. 3), um eine Senkfunktion zu bewirken. In Fig. 11 drückt der Daumen gegen die innere untere Seite der Wippe 56, d.h. gegen das innere Ende in Fig. 3 in Richtung Pfeil 70, um eine Hebenfunktion des Lasttragmittels zu bewirken.

In den Fign. 12 und 13 ist die Handhabung und Betätigung des Deichselkopfes 40 im Mitfahrbetrieb dargestellt. Darin ist gezeigt, wie die linke Hand des Bedieners den Griffabschnitt 48 erfaßt, während er auf der in Fig. 1 rechten Seite der Plattform 14 steht und sich gleichzeitig mit der rechten Hand am Haltebügel 24 festhält. In Fig. 12 betätigt gleichzeitig der Daumen der linken Hand die Wippe 56 von der Oberseite einer vorderen Tastfläche 68, um eine Senkfunktion zu bewirken (siehe hierzu Fig. 3). In Fig. 13 drückt der Daumen der linken Hand von oben auf die Wippe 56 im Bereich der Tastfläche 66, um eine Hebenfunktion herbeizuführen. Es ist anhand der vorstehenden Figuren einleuchtend, daß der Daumen der linken Hand in Fig. 12 oder 13 die Wippe 56 auch von der Unterseite erfassen kann.

## Patentansprüche

1. Deichsel für einen Mitgeh- und Mitfahrstapler (10), der einen Staplerkörper (12), einen Fahrmotor, ein Lasttragmittel und eine Stehplattform (14) für einen Bediener aufweist, mit einer Deichselstange (18), die mit ihrem unteren Ende um eine horizontale Achse schwenkbar und zu Lenkzwecken um eine vertikale Achse drehbar am Staplerkörper (12) gelagert ist, und einem Deichselkopf (40), der eine Ober- und eine Unterseite hat und symmetrisch zur Längsachse der Deichselstange (18) aufgebaut ist und der ein mit der Deichselstange verbundenes Querstück (42), ein mit dem Querstück verbundenes Horn (44) mit einer oberen Fläche und Seitenflächen und beidseitig des Horns im Abstand zum Querstück (42) und annähernd parallel zu diesem erstreckende Griffabschnitte (46,48) aufweist, wobei die Griffabschnitte (46, 48) zwischen dem Horn (44) und an jeweils einem am Querstück angebrachten Schenkelabschnitt (50, 52) um ihre Längsachse drehbar gelagert sind zur Ansteuerung einer Steuerschaltung für den Fahrmotor und wobei an beiden Seitenflächen des Horns (44) oberhalb der Griffabschnitte (46, 48) sich annähernd parallel zur zugekehrten Seitenfläche erstreckende Tasterabschnitte um eine annähernd horizontale Achse schwenkbar gelagert und so angeordnet sind, daß sie vom Daumen oder Zeigefinger einer den zugeordneten Griffabschnitt (46, 48) erfassenden Hand betätigbar sind, wobei die Tasterabschnitte sich jeweils so weit nach vom bzw. nach hinten über die Griffabschnitte (46, 48) hinaus erstrecken, daß sie auch von der Unterseite des Deichselkopfes (40) mit dem Daumen oder Zeigefinger betätigbar sind, wobei die Tasterabschnitte von einer Federanordnung in eine neutrale Position vorgespannt sind und wobei den Tasterabschnitten eine Schalteranordnung zugeordnet ist, die durch ein Verschwenken der Tasterabschnitte betätigbar ist zur Ansteuerung der Heben/Senken-Steuervorrichtung.

2. Deichsel nach Anspruch 1, wobei die Schwenkachse (60) der Tasterabschnitte nahe der Drehachse (58) des zugeordneten Griffabschnitts (46, 48) liegen.

3. Deichsel nach Anspruch 1, wobei die Tasterabschnitte Teil einer Wippe (54, 56) sind, deren Schwenkachse (60) nahe der Drehachse (58) des zugeordneten Griffabschnitts liegt, und wobei die Federanordnung die Wippe in eine mittlere neutrale Position vorspannt.

4. Deichsel nach Anspruch 3, wobei die Wippe (54, 56) von einem länglichen Hebel gebildet ist, dessen obere Seite annähernd plan und dessen Unterseite zwischen den Enden konkav und an den Enden in Seitenansicht ballig geformt ist.

5. Deichsel nach Anspruch 1 oder 3, wobei jedem Tasterabschnitt bzw. jeder Wippe (54, 56) Schaltelemente zugeordnet sind, die an der Seitenfläche des Horns (44) unterhalb und/oder oberhalb der Tasterabschnitte bzw. der Wippe angeordnet sind.

6. Deichsel nach Anspruch 1 oder 3, wobei die Schalteranordnung innerhalb des Horns (44) untergebracht ist und von einer Lagerwelle der Tasterabschnitte oder der Wippe (54, 56) betätigbar ist.

7. Deichsel nach Anspruch 1 oder 3, wobei die Oberseite der Tasterabschnitte oder der Wippe (54, 56) etwas unterhalb der Oberseite des Horns liegt.

8. Deichsel nach Anspruch 1 oder 3, wobei die Oberseite oder Unterseite der Tasterabschnitte oder der Wippe (54, 56) Tastflächen für den Daumen bzw. den Zeigefinger aufweist.

9. Deichsel nach Anspruch 1, wobei die Griffabschnitte sich zu beiden Seiten des Horns (44) schräg nach außen und unten erstrecken.

## Claims

1. A steering arm for a walkie/rider truck (10), comprising a truck body (12), a driving motor, a load bearing means, a platform (14) for an operator, the steering arm including a steering rod (18) having a lower end which for steering purposes is supported by the truck body (12) for rotation about a vertical and a horizontal axis, and a steering head (40)which has an upper and a lower side, the steering head being symmetrical with respect to the longitudinal axis of the steering rod, the steering head having a transverse portion (42), a horn portion (44) connected to the transverse portion, the horn portion having an upper surface and lateral surfaces, and grip portions (46, 48) on both sides of the horn portion, the grip portions (46, 48) extending approximately perpendicular to horn portion (44) in spaced relation to the transverse portion (42), the grip portions (46, 48) between the horn portion (44) and leg portions (50, 52) attached to the associated transverse portion being supported for rotation for controlling a control device for the driving motor, button portions extending on both lateral sides of the horn portion (44) adjacent thereto above the grip portions (46, 48), the button portions extend approximately parallel to the associated lateral surfaces of the horn portion (44) and are supported for pivoting movement about an approximately horizontal axis, the button portions are arranged such that they are adapted to be actuated by the thumb or the index finger of the hand grasping the associated grip portion (46, 48), the button portions with both ends extend beyond the grip portions (46, 48) such that they can be also actuated from the lower side of the steering head (40) by the thumb and the index finger, the button portions being biased into a neutral position by spring means and a switch arrangement being associated with the button portions which are actuated by the pivoting of the button portions to control a raising or lowering control means.

2. A steering arm of claim 1, wherein the pivoting axis (60) of the button portions is close to the rotation axis (58) of the associated grip portion.

3. A steering arm of claim 1, wherein the button portions are part of a rocker (54, 56) having a pivoting axis (60) adjacent to the rotation axis (58) of the associated grip portion and a spring arrangement biases the rocker into an intermediate neutral position.

4. A steering arm of claim 3, wherein the rocker (54, 56) is defined by an elongated lever having an upper side approximately plane and a lower side which between the ends is concave and has convex portions in lateral view at the ends thereof.

5. The steering arm of claim 1 or 3, wherein each button portion or each rocker (54, 56) respectively, is associated with switch elements which are located on the lateral surface of the horn (44) below and/or above the button portions or the rocker, respectively.

6. The steering arm of claim 1 or 3, wherein the switch arrangement is located within the horn portion (44) and can be actuated by a shaft of the button portions or a rocker (54, 56).

7. The steering arm of claim 1 or 3, wherein the upper side of the button portions or the rockers (54, 56), respectively, is positioned somewhat below the upper side of horn portion.

8. The steering arm of claim 1 or 3, wherein the upper side or the lower side of the button portions or of the rockers (54, 56) have actuation surfaces for the thumb or the index finger, respectively.

9. A steering arm of claim 1, wherein the gripping portions on both sides of the horn portion (44) extend obliquely outwardly downwardly.

## Revendications

1. Timon pour un chariot élévateur (10), qui comprend un corps de chariot (12), un moteur de traction, un moyen de support de charge et une plateforme de tenue (14) pour un utilisateur, comprenant une barre de timon (18), qui est montée avec son extrémité inférieure sur le corps de chariot (12) de manière à pouvoir pivoter autour d'un axe horizontal et, aux fins de direction, de manière à pouvoir tourner autour d'un axe vertical, et une tête de timon (40), qui présente une face supérieure et une face inférieure et est construite de manière symétrique par rapport à l'axe longitudinal de la barre de timon (18) et qui comprend une traverse (42) reliée à la barre de timon, une corne (44) reliée à la traverse comprenant une surface supérieure et des surfaces latérales et des sections de poignée (46, 48) s'étendant de part et d'autre de la corne à distance de la traverse (42) et approximativement parallèlement à celle-ci, les sections de poignée (46, 48) étant montées entre la corne (44) et sur respectivement une section de branche (50, 52) aménagée sur la traverse de manière à pouvoir tourner autour de leur axe longitudinal pour commander un circuit de commande pour le moteur de traction et des sections de bouton étant montées sur les deux surfaces latérales de la corne (44) au-dessus des sections de poignée (46, 48) en s'étendant approximativement parallèlement à la surface latérale adjacente de manière à pouvoir pivoter autour d'un axe approximativement horizontal et étant disposées de sorte qu'elles peuvent être actionnées par le pouce ou l'index d'une main enserrant la section de poignée (46, 48) associée, les sections de bouton s'étendant respectivement si loin vers l'avant et/ou vers l'arrière au-delà des sections de poignée (46, 48) qu'elles peuvent également être actionnées depuis la face inférieure de la tête de timon (40) par le pouce ou l'index, les sections de bouton étant précontraintes par un système de ressort dans une position neutre et aux sections de bouton étant associé un système de commutateur, qui peut être actionné par un pivotement des sections de bouton pour commander le dispositif de commande d'élévation/d'abaissement.

2. Timon selon la revendication 1, l'axe de pivotement (60) des sections de bouton se situant à proximité de l'axe de rotation (58) de la section de poignée (46, 48) associée.

3. Timon selon la revendication 1, les sections de bouton faisant partie d'une bascule (54, 56), dont l'axe de pivotement (60) se situe à proximité de l'axe de rotation (58) de la section de poignée associée, et le système de ressort précontraignant la bascule dans une position centrale neutre.

4. Timon selon la revendication 3, dans lequel la bascule (54, 56) est formée par un levier longitudinal, dont la face supérieure est approximativement plane et dont la face inférieure est concave entre les extrémités et convexe sur les extrémités en vue latérale.

5. Timon selon la revendication 1 ou 3, des éléments de commutation étant associés à chaque section de bouton et/ou à chaque bascule (54, 56), lesquels sont disposés sur la surface latérale de la corne (44) au-dessous et/ou au-dessus des sections de bouton et/ou de la bascule.

6. Timon selon la revendication 1 ou 3, le système de commutateur étant logé à l'intérieur de la corne (44) et pouvant être actionnée par un arbre de palier des sections de bouton ou de la bascule (54, 56).

7. Timon selon la revendication 1 ou 3, la face supérieure des sections de bouton ou de la bascule (54, 56) se situant approximativement au-dessous de la face supérieure de la corne.

8. Timon selon la revendication 1 ou 3, la face supérieure ou la face inférieure des sections de bouton ou de la bascule (54, 56) comprenant des surfaces tactiles pour le pouce et/ou l'index.

9. Timon selon la revendication 1, les sections de poignée s'étendant de part et d'autre de la corne (44) de manière oblique vers l'extérieur et vers le bas.
